# EUROPEAN PATENT SPECIFICATION

(11) **EP 1 052 392 B1**
(45) Date of publication and mention of the grant of the patent: **13.04.2005**
(21) Application number: 00109376.4
(22) Date of filing: 02.05.2000
(51) Int. Cl.: F02D 41/40, F02M 65/00, F02D 41/28

(54) **Fuel injection timing measuring system for a diesel engine**
Vorrichtung zur Ermittlung des Kraftstoffeinspritzzeitpunkts für eine Dieselbrennkraftmaschine
Système de mesure de l'instant d'injection pour un moteur Diesel

(30) Priority: 06.05.1999 JP 12565999
(43) Date of publication of application: 15.11.2000
(73) Proprietor: NISSAN MOTOR CO., LTD., Yokohama-shi Kanagawa-ken (JP)
(72) Inventor: Tabayashi, Katsutoshi, Yokohama-shi, Kanagawa-ken (JP)
(74) Representative: Weber, Joachim, Dr.

(56) References cited:
- FR-A- 2 325 816
- US-A- 4 378 695
- US-A- 4 669 440
- US-A- 4 788 960
- PATENT ABSTRACTS OF JAPAN vol. 007, no. 246 (M-253), 2 November 1983 (1983-11-02) & JP 58 133472 A (NISSAN JIDOSHA KK), 9 August 1983 (1983-08-09)

## Description

### BACKGROUND OF THE INVENTION

The present invention relates to a system that measures whether or not fuel injection from a fuel injection nozzle of a diesel engine is performed according to a prescribed timing, and more particularly to a fuel injection timing measuring system capable of efficient measurement of the fuel injection timing of all engines at the test stage of an engine production line.

In a diesel engine, because of the difficulty of quantitatively determining the actual timing of fuel injection from a fuel injection nozzle, general approaches taken include that of detecting the lift timing of the plunger of the fuel injection pump to predict the timing of fuel injection from the fuel injection nozzle, and that of using a nozzle lift sensor to detect the timing of the opening of the nozzle valve and calculating the phase difference between this timing and an engine rotation signal.

### SUMMARY OF THE INVENTION

In the former method, because of the great length of the tubing from the fuel injection pump to the nozzle, and differences in valve-opening characteristics between individual nozzles, a time lag occurs between the indication from the pump and the time of the actual fuel injection, this phenomenon imposing an intrinsic limit to the accuracy of fuel injection timing measurement. With the latter method, the measurement requires the replacement of the nozzles with nozzles having a lift sensor, thereby making the timing measurement extremely costly in terms of labor and time so that, for example, even if this method can be applied to an engine assembly line testing process, the testing is not possible on all units, and must inevitably be done as a sampling test. Another problem with this method is the need to make a visual judgment of the test results using, for example, an oscilloscope, this being accompanied by a susceptibility to the influence of rotation variation caused by fuel combustion, the result being insufficient reliability of the measurement results.

Accordingly, in view of the above-described problems with the related art, it is an object of the present invention to provide a measurement system which not only minimizes the difference between the measured timing and the actual timing of fuel injection, but which also improves measurement accuracy by reducing the influence of rotation variation and external disturbances on the measured value, reduces the complexity of the setup required for measurement, and enables inline testing of all engines when applied to an engine assembly line.

An aspect of the present invention to achieve the object is a system for measuring a timing of a fuel injection from a fuel injection nozzle of a diesel engine, the system comprising an engine rotation sensor for outputting a rotation signal synchronized to a rotation of the engine as a periodic signal, a top dead center sensor for detecting a state that a piston in a cylinder of the engine corresponding to the fuel injection nozzle has reached a top dead center thereof to output a top dead center signal with a prescribed time delay, a fuel injection timing sensor arranged independently of the fuel injection nozzle to detect an analogical change of a parameter variable in connection with the fuel injection from the fuel injection nozzle, the parameter being a mechanical displacement of a specific part of the engine except the fuel injection nozzle, and a measurement controller responsible for outputs of the sensors input thereto to execute a prescribed calculation for determining an actual timing of the fuel injection from the fuel injection nozzle, wherein the measurement controller comprises a signal processor that identifies a position of a peak value of an analogical output signal from the injection timing sensor, with a resolution obtained by segmentizing a basic period of the rotation signal by a prescribed period and that further calculates the actual timing of the fuel injection as a phase difference between the position of the peak value and a timing of occurrence of the top dead center signal detected by the top dead center sensor, the timing of occurrence of the top dead center signal being delayed from the position of the peak value.

The results of the calculation performed by the signal processor can be viewed directly on a display system such as CRT display or the like, or can be compared with a preset reference value, the signal processing being performed until a judgment is made thereby, the results of the judgment being then viewed on the display system. By virtue of the above-noted measurement, the measurement accuracy is high, as is the intrinsic reliability of the measured value. Additionally, the ability to apply this aspect of the present invention using existing rotation sensors and TDC sensors, for example, of the engine under measurement reduces the complexity of the setup for measurement, making it possible to perform inspection of all engines passes through an engine assembly line.

### BRIEF DESCRIPTION OF THE DRAWINGS

The above and further objects and novel features of the present invention will more fully appear from the following detailed description when the same is read in conjunction with the accompanying drawings, in which:
Fig. 1 is a drawing showing the configuration of a preferred embodiment of a measuring system according to the present invention;
Fig. 2 is a drawing showing the mounting of a tube expansion sensor (injection timing sensor) in Fig. 1;
Fig. 3 is a timing diagram showing the mutual relationship between outputs of sensors in Fig. 1;
Figs. 4A and 4B are enlarged views respectively of upper and lower curves in pan A of Fig. 3; and
Fig. 5 is a partial enlarged view of the mounting in the case in which a nozzle lift sensor is used as an injection timing sensor.

### DESCRIPTION OF THE EMBODIMENT

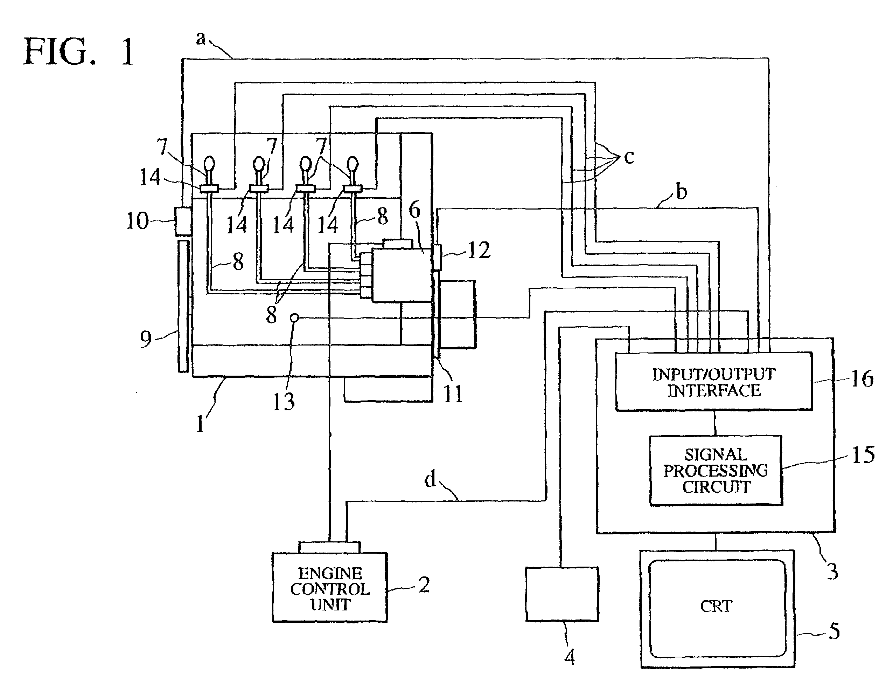

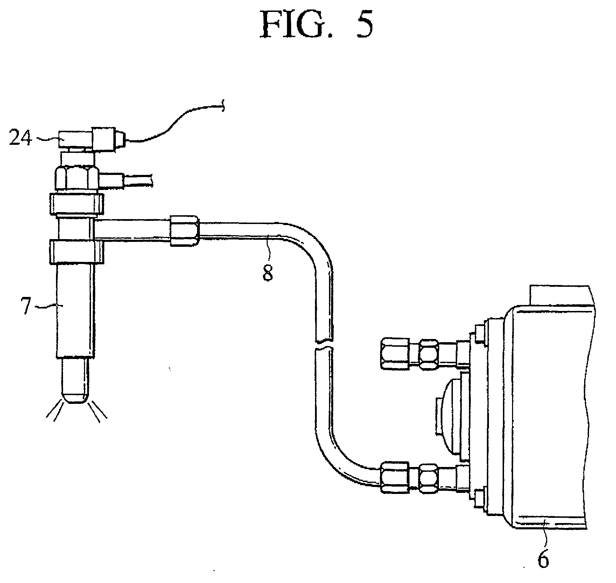

There will be described a measuring system according to an embodiment of the present invention, with reference to Fig. 1 through Fig. 5.

In Fig. 1, the reference numeral 1 denotes a diesel engine that is to be measured (hereinafter simply referred to as the engine), 2 is an engine control unit associated with the engine 1, 3 is a measurement controller based on a computer, 4 is a console box for controlling measurements (operating panel), and 5 is a CRT display.

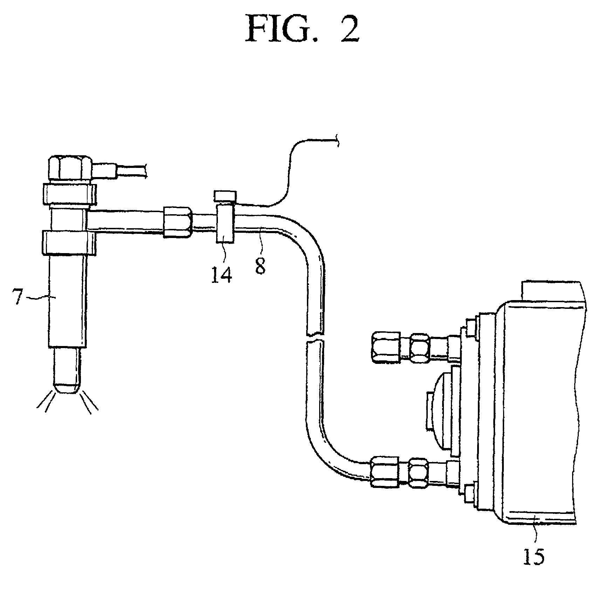

A fuel injection pump (hereinafter referred to as the pump) 6 is installed on the engine 1 and, as shown in Fig. 2, at each cylinder an independent fuel injection nozzle (hereinafter referred to as a nozzle) 7 and a pump 6 are connected by an injection tube 8, a measured amount of fuel being fed from the pump 6 by pressure via the injection tube 8, as is normally done.

The engine 1 is further provided with an engine rotation sensor 10 that outputs a periodic engine rotation signal 10a by detecting the teeth of a ring gear 9, a TDC (top dead center) 12 that outputs a TDC signal b each time it detects that the piston stroke has reached the top dead center position, by detecting the top dead center detection plate 11, and a vibration sensor 13 for detecting vibration of the cylinder block or the like that accompanies combustion in the engine 1.

As shown in Fig. 2, each injection tube 8 has a separate tube expansion sensor 14 mounted as an injection timing sensor as close as possible to the nozzle 7. This tube expansion sensor 14 performs detection using a piezo-electric element to detect a minute expansion of the injection tube 8 that occurs with pressurized feed of fuel from the pump 6, and generates an expansion signal c, the timing of which, as was previously known, can be taken as the timing of the actual start of fuel injection at the nozzle 7.

The outputs 1, b, c, and d of the rotation sensor 10, the TDC sensor 12, the vibration sensor 13 and the tube expansion sensor 14 are input via an input/output interface 16 of a signal processing circuit 15, and are subjected to prescribed processing for calculating the actual fuel injection, as described below.

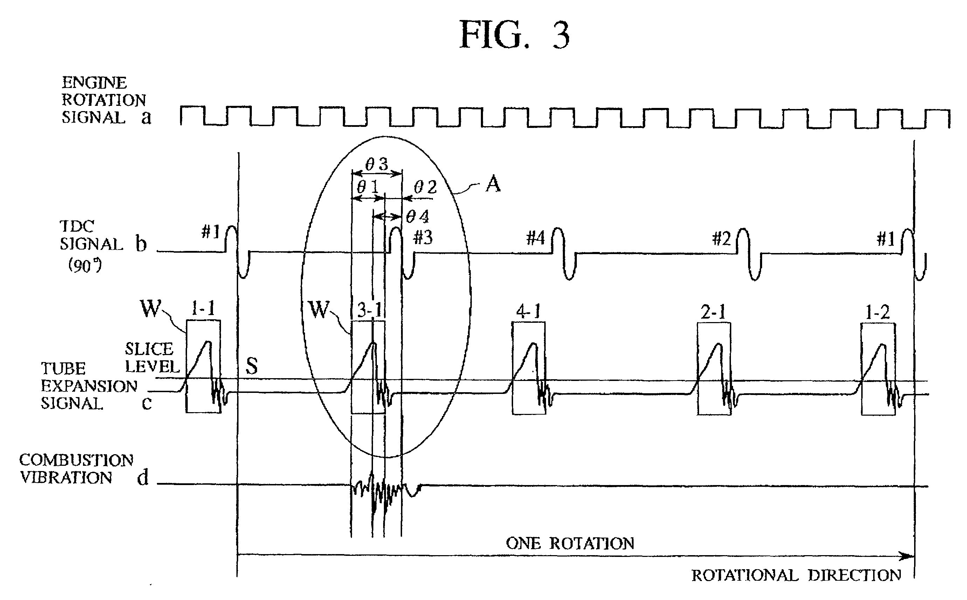

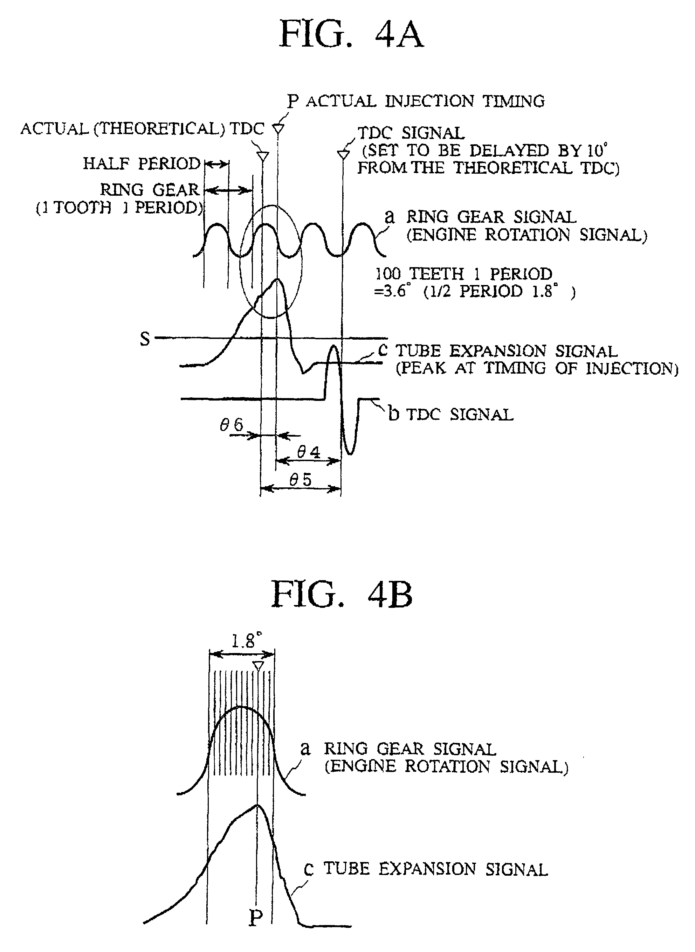

Fig. 3 is a timing diagram of the output signals a, b, c, and d from the sensors 10, 12, 13, and 14, and Fig. 4 shows partial enlarged views of the waveforms in part A in Fig. 3, for the condition in which the engine is idling, the engine rotation signal a being a continuously output periodic squarewave or sinewave signal synchronized to the rotation of the engine 1, and the TDC signal B output from the TDC sensor 12 being a being a single-period sinewave or independent waveform each 90° when the piston stroke of each cylinder reaches the top dead center. In this embodiment of the present invention, because of the need to perform normal engine control, the TDC signal b is made to rise at a time delayed by θ5 (for example 10° phase angle) with respect to the theoretical top dead center position, so that it is generated with a time offset of θ5.

Because the tube expansion sensor c of the injection tube 8, as noted above, can be treated as the actual fuel injection timing, the peak thereof is generated independently for each fuel injection of each nozzle 7. In the same manner, the vibration signal d that represents vibration accompanying fuel combustion is generated as a pulse signal synchronized to the above-noted fuel injection timing.

The processing performed in the signal processing circuit 15 is as follows. This signal processing circuit 15 has a preset window W and slicing level (threshold level) S, the window being used to extract the peak part when the slicing level S is exceeded. The window W is used to suppress the influence of noise and variations in output level and to achieve this end is established based on the zero-crossing point of the TDC signal b. For example, this window W can be established to extend from a point 3° before (θ2=3°) the zero-crossing point, to a point 15° after (θ3=15°) after the zero-crossing point. It will be further understood that the slice level S and the size of the window W can be arbitrarily adjusted.

With regard to the engine rotation signal a, if the ring gear shown in Fig 1 has, for example, 100 teeth, a one-period signal, as shown in Fig. 4, will represent 3.6° (with one-half period representing 1.8°), so that a 1/20 resolution (resolution of 1.8°) is used to detect the phase position of the peak value P of the tube expansion signal P, using the period signal itself or its phase as a reference. Having done this, using the zero-crossing point of the TDC signal b, which is generated with a delay after the peak value P, the phase angle θ4 from the MC signal to the peak value P is calculated as the actual injection timing. In Fig. 4, θ5 is the amount of offset from the generation of the TDC signal from the theoretical top dead point, and θ6 is a phase angle of the injection timing, with reference to the above-noted actual top dead center point.

The above-described processing is performed repeatedly a plurality of times until a prescribed measurement time period has elapsed with the engine in the idling condition, the resulting data being stored in the signal processing circuit 15 until the elapse of this measurement time.

When the measurement time elapses, the signal processing circuit 15 the average value of the actual injection timing for each nozzle 7 is calculated, a comparison is made with respect to a preset reference value, and the results of this comparison and the average value are displayed along with the maximum and minimum values on the CRT display 5. It is preferable that the average, maximum, and minimum values be displayed after subtraction of the offset θ5 shown in Fig. 4.

Additionally, if necessary operation from the measurement console box 4 shown in Fig. 1 can be used to issue a command to the engine console unit 2, to perform intentional variable control of the engine rotation and the fuel injection timing under pre-established conditions, with the above-noted actual injection timing or average value thereof being calculated. Based on this data, it is possible to make a no/nogo test of a built-in timer function (not shown in the drawing) of the pump 6.

The vibration sensor shown in Fig. 1 detects vibration of the cylinder block which occurs as a result of fuel combustion. As is clear from Fig. 3, because the pulse-type vibration wave accompanying fuel combustion is exhibits a high degree of positional correlation to the peak value of the expansion signal c of the injection tube 8, in calculating the actual fuel injection timing, it is possible to use the output of the vibration sensor 13 in place of the expansion signal c of the injection tube 8.

According to the embodiments described, one type of fuel injection timing sensor is a tube expansion sensor which senses expansion in the injection tube accompanying pressurized fuel transmission from the fuel injection pump, this being provided in the region of a fuel injection nozzle in the fuel injection tube connecting the fuel injection pump and the fuel injection nozzle. Yet another type of fuel injection timing sensors that can be used include a vibration sensor the detects vibration of the engine that occurs at the time of combustion that occurs because of fuel injection, and a nozzle lift sensor that detects the timing of the opening of the nozzle valve that is added to the fuel injection nozzle. It is also possible to make a crankshaft angle sensor or the like already attached to the engine serve also as the rotation sensor.

There is provided a further improvement in injection timing measurement accuracy. Therefore, the peak value position (angle) of the output signal from the fuel injection timing sensor is identified using a resolution established by dividing the basic period of the engine rotation signal into sub-periods of a prescribed width, the phase angle from the timing of the generation of the TDC signal is calculated as the actual injection timing, thereby avoiding at least the influence of engine rotation variation on the measured value. In applying the above to testing on an engine assembly line, for example, because it is possible to make use as is of a rotation sensor and MC sensor that exist on the engine, in which only a tube expansion sensor is used as an injection timing sensor, immediate measurement is possible by merely attaching this tube expansion sensor to the engine.

In the embodiment, an independent tube expansion sensor is provided on the fuel injection nozzle of each cylinder of the engine, the actual fuel injection timing being calculated separately for each fuel injection nozzle. Therefore, it is possible to identify timing or pressure abnormalities for each individual cylinder, thereby enabling determination of problems occurring in fuel injection nozzles or pumps.

In the embodiment, the signal processor has a preset threshold value for the detection of the peak value of the output from the fuel injection timing sensor, the peak value being recognized only when this threshold value is exceeded. By recognizing the peak value using a specific threshold value, there is avoided the influence on the measured value of at least disturbances such as external noise, thereby providing a significant improvement in measurement accuracy.

In the embodiment, the signal processor has a presetd valid time period with regard to the detection of the peak value of the output from the fuel injection timing sensor, and recognizes the peak value only during this valid time period. There also is avoided the influence of disturbance such as external noise on the measured value.

In the embodiment, the signal processor calculates the injection timing a plurality of times during a pre-established measurement time, and further calculates the average value of the individual injection timing calculation results. By calculating the average injection timing from a plurality of measured timings, the ability to determine the injection timing is further enhanced, as is the reliability of the measured value.

In the embodiment, the measurement controller performs communication with an engine control unit associated with the engine so as to change the engine operating conditions, the actual fuel injection timing or average thereof being calculated for various operating conditions. Therefore, by intentionally variably controlling the fuel injection timing or engine rotation and measuring the fuel injection timing or average value thereof when the engine is in a transient state, it is possible to determine whether or not the timer function of a fuel injection pump having a built-in timer is operating normally.

The contents of Japanese Patent Application No. 11-125695 are incorporated herein by reference.

While preferred embodiments of the present invention have been described using specific terms, such description is for illustrative purposes, and it is to be understood that changes and variations may be made without departing from the scope of the following claims.

## Claims

1. A system for measuring a timing of a fuel injection from a fuel injection nozzle of a diesel engine (1), the system comprising:
an engine rotation sensor (10) for outputting a rotation signal (a) synchronized to a rotation of the engine (1) as a periodic signal;
a top dead center sensor (12) for detecting a state that a piston in a cylinder of the engine (1) corresponding to the fuel injection nozzle (7) has reached a top dead center thereof to output a top dead center signal (b) with a prescribed time delay;
a fuel injection timing sensor arranged independently of the fuel injection nozzle (7) to detect an analogical change of a parameter variable in connection with the fuel injection from the fuel injection nozzle (7), the parameter being a mechanical displacement of a specific part of the engine (1) except the fuel injection nozzle (7); and
a measurement controller (3) responsible for outputs of the sensors input thereto to execute a prescribed calculation for determining an actual timing of the fuel injection from the fuel injection nozzle (7),
wherein the measurement controller (3) comprises a signal processor that identifies a position of a peak value of an analogical output signal from the injection timing sensor, with a resolution obtained by segmentizing a basic period of the rotation signal by a prescribed period and that further calculates the actual timing of the fuel injection as a phase difference between the position of the peak value and a timing of occurrence of the top dead center signal (b) detected by the top dead sensor (12), the timing of occurrence of the top dead center signal (b) being delayed from the position of the peak value,
wherein the signal processor calculates the actual timing of fuel injection for a respective one of a plurality of occurrences of fuel injection within a preset measurement time, and an average value thereof over the plurality of occurrences of fuel injection,
wherein the system further comprises an engine controller (2) associated with the engine (1) and adapted for communication with the measurement controller (3) to change an operating condition of the engine (1), and the signal processor calculates the actual timing of fuel injection or an average value thereof in correspondence to the operating condition.

2. A system according to claim 1, wherein the fuel injection timing sensor (14) comprises a tube expansion sensor (14) provided on an injection tube connecting the fuel injection nozzle (7) and a fuel injection pump (6) to each other, near the fuel injection nozzle (7), for detecting an expanding displacement on the fuel injection nozzle (7).

3. A system according to claim 2, wherein an actual injection timing is calculated of a respective fuel injection nozzle (7) of the engine (1), and an independent tube expansion sensor (14) is provided for a respective fuel injection nozzle (7).

4. A system according to any of claims 1 to 3, wherein the signal processor has a preset threshold value for detecting the peak value to be in excess thereof.

5. A system according to any of claims 1 to 4, wherein the signal processor has a preset temporary range to be effective for detecting the peak value to occur therein.

## Patentansprüche

1. System zum Messen eines Kraftstoffeinspritzzeitpunktes einer Kraftstoffeinspritzdüse eines Dieselmotors (1), wobei das System folgendes aufweist:
einen Motorumdrehungssensor (10) zum Aussenden eines Umdrehungssignals (a), das mit einer Umdrehung des Motors (1) als ein periodisches Signal synchronisiert ist;
einen oberen Totpunkt-Sensor (12) zum Erfassen eines Zustandes, das ein Kolben in einem Zylinder des Motors (1) gemäß der Kraftstoffeinspritzdüse (7) einen oberen Totpunkt erreicht hat, um ein oberes Totpunkt-Signal (b) mit einer vorgeschriebenen Zeitverzögerung auszusenden;
einen Kraftstoffeinspritzzeitpunktsensor, der unabhängig von der Kraftstoffeinspritzdüse (7) angeordnet ist, um eine analoge Änderung eines Parameters, der in Verbindung mit der Kraftstoffeinspritzung von der Kraftstoffeinspritzdüse (7) variabel ist, zu ermitteln, wobei der Parameter eine mechanische Verschiebung eines bestimmten Teils des Motors (1) mit Ausnahme der Kraftstoffeinspritzdüse (7) ist; und
ein Messsteuergerät, das für die Ausgaben der dazugehörigen Sensoreneingabe verantwortlich ist, um eine vorgeschriebene Berechnung zum Bestimmen eines aktuellen Kraftstoffeinspritzzeitpunktes von der Kraftstoffeinspritzdüse (7) auszuführen,
wobei das Messsteuergerät einen Signalprozessor aufweist, der eine Position des Spitzenwertes eines analogen Ausgangssignals vom Einspritzzeitpunktsensor ermittelt, mit einer Auflösung, die die durch Teilen einer Basisperiode des Umdrehungssignals in Segmente durch eine vorgeschriebene Periode erhalten wird, und der ferner den aktuellen Zeitpunkt der Kraftstoffeinspritzung als eine Phasendifferenz zwischen der Position des Spitzenwertes und eines Zeitpunktes des Auftretens des oberen Totpunkt-Signals (b), das durch den oberen Totpunkt-Sensor (12) ermittelt wird, berechnet, wobei der Zeitpunkt des Auftretens des oberen Totpunkt-Signals (b) von der Position des Spitzenwertes verzögert wird,
wobei der Signalprozessor den aktuellen Kraftstoffeinspritzzeitpunkt für eine entsprechende Einspritzung aus einer Mehrzahl von Kraftstoffeinspritzvorgängen innerhalb einer voreingestellten Messzeit, und einen Durchschnittswert davon für mehrere Kraftstoffeinspritzvorgänge berechnet,
wobei das System ferner eine Motorsteuereinheit (2) aufweist, die mit dem Motor (1) verbunden und zur Verbindung mit dem Messsteuergerät (3) vorgesehen ist, um einen Betriebszustand des Motors (1) zu ändern, und wobei der Signalprozessor den gegenwärtigen Kraftstoffeinspritzzeitpunkt oder einen Durchschnittswert davon gemäß des Betriebszustandes berechnet.

2. System gemäß Anspruch 1, wobei der Kraftstoffeinspritzzeitpunktsensor (14) einen Rohrausdehnungssensor (14) aufweist, der auf einem Einspritzrohr, das mit der Kraftstoffeinspritzdüse (7) und einer Kraftstoffeinspritzpumpe (6) miteinander verbunden ist, nahe der Kraftstoffeinspritzdüse (7) angeordnet ist, um eine sich erweiternde Ausdehnung auf der Kraftstoffeinspritzdüse (7) zu ermitteln.

3. System gemäß Anspruch 2, wobei ein gegenwärtiger Einspritzzeitpunkt einer entsprechenden Kraftstoffeinspritzdüse (7) des Motors (1) berechnet wird, und ein unabhängiger Rohrausdehnungssensor (14) für eine entsprechende Kraftstoffeinspritzdüse (7) angeordnet ist.

4. System gemäß einem der Ansprüche 1 bis 3, wobei der Signalprozessor einen voreingestellten Schwellenwert zum Ermitteln des darüber hinausgehenden Spitzenwertes aufweist.

5. System gemäß einem der Ansprüche 1 bis 4, wobei der Signalprozessor einen voreingestellten vorübergehenden Bereich aufweist, der zum Ermitteln des darin auftretenden Spitzenwertes wirksam wird.

## Revendications

1. Système pour mesurer un instant d'une injection de carburant à partir d'une buse d'injection de carburant d'un moteur diesel (1), le système comprenant :
un capteur de rotation de moteur (10) pour délivrer un signal de rotation (a) synchronisé avec une rotation du moteur (1) en tant que signal périodique ;
un capteur de point mort haut (12) pour détecter un état dans lequel un piston dans un cylindre du moteur (1) correspondant à la buse d'injection de carburant (7) a atteint un point mort haut de celui-ci afin de sortir un signal de point mort haut (b) avec un retard prescrit ;
un capteur d'instant d'injection de carburant agencé indépendamment de la buse d'injection de carburant (7) pour détecter une variation analogique d'un paramètre variable en relation avec l'injection de carburant à partir de la buse d'injection de carburant (7), le paramètre étant un déplacement mécanique d'une partie spécifique du moteur (1) à l'exception de la buse d'injection de carburant (7) ; et
un contrôleur de mesure (3) qui réagit aux sorties des capteurs qui lui sont appliquées pour exécuter un calcul prescrit pour déterminer un instant réel de l'injection de carburant à partir de la buse d'injection de carburant (7),
dans lequel le contrôleur de mesure (3) comprend un processeur de signal qui identifie une position d'une valeur crête d'un signal de sortie analogique provenant du capteur d'instant d'injection, avec une résolution obtenue en segmentant une période de base du signal de rotation par une période prescrite, et qui calcule, en outre, l'instant réel de l'injection de carburant en tant que différence de phase entre la position de la valeur crête et un instant d'apparition du signal de point mort haut (b) détectée par le capteur de point mort haut (12), l'instant d'apparition du signal de point mort haut (b) étant retardé par rapport à la position de la valeur crête,
dans lequel le processeur de signal calcule l'instant réel d'injection de carburant pour une apparition respective d'une pluralité d'apparitions d'injection de carburant dans un temps de mesure prédéterminé et une valeur moyenne de celui-ci sur la pluralité d'apparitions d'injection de carburant,
dans lequel le système comprend, en outre, un contrôleur de moteur (2) associé au moteur (1) et adapté pour communiquer avec le contrôleur de mesure (3) pour modifier une condition de fonctionnement du moteur (1), et le processeur de signal calcule l'instant réel d'injection de carburant ou une valeur moyenne de celui-ci en correspondance avec la condition de fonctionnement.

2. Système selon la revendication 1, dans lequel le capteur d'instant d'injection de carburant (14) comprend un capteur de dilatation de tuyau (14) prévu sur un tuyau d'injection reliant la buse d'injection de carburant (7) et une pompe d'injection de carburant (6) l'une à l'autre, à proximité de la buse d'injection de carburant (7), pour détecter un déplacement de dilatation sur la buse d'injection de carburant (7).

3. Système selon la revendication 2, dans lequel l'instant d'injection réel d'une buse d'injection de carburant (7) respective du moteur (1) est calculé, et un capteur de dilatation de tuyau (14) indépendant est prévu pour une buse d'injection de carburant (7) respective.

4. Système selon l'une quelconque des revendications 1 à 3, dans lequel le processeur de signal comporte une valeur de seuil prédéterminée pour détecter si la valeur crête dépasse celle-ci.

5. Système selon l'une quelconque des revendications 1 à 4, dans lequel le processeur de signal comporte une plage temporaire prédéterminée efficace pour détecter si la valeur crête apparaît dans celle-ci.
